# EUROPEAN PATENT APPLICATION

(11) **EP 2 840 197 A1**
(43) Date of publication of application: **25.02.2015**
(21) Application number: 13778512.7
(22) Date of filing: 16.04.2013
(51) Int. Cl.: E04C 5/18, B21B 1/08, B21H 3/04, F16B 5/02, F16B 7/18

(54) **THREADED REINFORCING BAR COUPLING FOR DEFORMED REINFORCING BAR, AND THREADED DEFORMED REINFORCING BAR**

(30) Priority: 19.04.2012 JP 2012095213
(71) Applicant: Fukuda, Akira, Osaka 561-0828 (JP)
(72) Inventor: WAKIYAMA, Kozo, Ibaraki-shi Osaka 567-0048 (JP); HIRAI, Keiji, Miyako-gun Fukuoka 800-0345 (JP)
(74) Representative: Schön, Christoph
(86) International application number: PCT/JP2013/061235
(87) International publication number: WO 2013/157531

(57) **Abstract**

A threaded reinforcing bar coupling for a deformed reinforcing bar according to the present invention connects a pair of reinforcing bars (1, 1), which are deformed reinforcing bars, with male threaded portions (1c) provided at end portions of the reinforcing bars and a threaded cylinder (2). In each reinforcing bar (1), by roll forming on an iron wire rod which is a raw material, a projection (1b) on an outer peripheral surface is formed and a diameter enlarged portion which is larger in diameter than another portion is formed in a portion in a longitudinal direction. An outer diameter of the diameter enlarged portion is not larger than a reinforcing bar outermost diameter (D1) including the projection (1a) of the reinforcing bar (1). The male threaded portion (1c) is formed in the diameter enlarged portion by rolling.

## Description

### CROSS REFERENCE TO THE RELATED APPLICATION

This application is based on and claims Convention priority to Japanese patent application No. 2012-095213, filed April 19, 2012, the entire disclosure of which is herein incorporated by reference as a part of this application.

### BACKGROUND OF THE INVENTION

### (Field of the Invention)

The present invention relates to a threaded reinforcing bar coupling for a deformed reinforcing bar for use in reinforced concrete, and a threaded deformed reinforcing bar.

### (Description of Related Art)

In reinforced concrete, deformed reinforcing bars are generally used as reinforcing bars. In an elongate pillar, a beam, continuous footing, or the like, in order to make reinforcing bars having limited lengths into a continuous reinforcing bar at a site, various reinforcing bar couplings are used. General reinforcing bar couplings include a lap coupling in which reinforcing bars overlap each other by a predetermined length, and a gas pressure welded coupling. However, the lap coupling has the drawback that a bar arrangement structure is complicated due to the overlap, and the gas pressure welded coupling has the drawback that the quality of the coupling depends on the skill of a pressure-welding worker.

Thus, a coupling in which grout is injected into a sleeve together with a reinforcing bar has been developed as a special coupling. The special coupling in which grout is injected is preferred in terms of simplification of a bar arrangement structure and thus has been put to practical use. However, the special coupling has the drawback that, for example, a curing period of about 1 day is required to cure the grout and thus a construction period becomes prolonged.

A threaded coupling has been proposed as another special coupling that takes a short construction period (Patent Document 1). Patent Document 1 states that in order to ensure desired connection strength, a diameter enlarged portion is provided at a reinforcing bar end portion and is subjected to thread forming, or a thick-diameter screw shaft which is a separate component is joined to the reinforcing bar end portion by friction welding.

### [Prior Art Document]

[Patent Document 1] JP Laid-open Patent Publication No. 2002-227342

### SUMMARY OF THE INVENTION

The threaded reinforcing bar coupling is excellent in that construction can be carried out in a short period as described above. However, in order to ensure desired connection strength, the male threaded portion at the end portion needs to be subjected to a diameter enlarging process. A method of the diameter enlarging process includes a method in which a thick-diameter screw shaft which is a separate component is joined to a reinforcing bar end portion by friction welding; and a method in which a reinforcing bar end portion is heated and a compressive force is applied thereto to provide a diameter enlarged portion. However, the friction welding process and the heating/compression process require large-scale facilities in order to ensure desired accuracy and reliability, and also it is difficult to ensure desired productivity.

An object of the invention is to provide a threaded reinforcing bar coupling for a deformed reinforcing bar in which a male threaded portion is easily formed at a reinforcing bar end portion and which is excellent in productivity and strength of the male threaded portion; and to simplify manufacture of a threaded deformed reinforcing bar used in the threaded reinforcing bar coupling for a deformed reinforcing bar and improve the productivity thereof.

A threaded reinforcing bar coupling for a deformed reinforcing bar according to the present invention is a reinforcing bar coupling which connects a pair of reinforcing bars. A male threaded portion is provided at each of opposed end portions of the pair of reinforcing bars to be connected to each other. A threaded cylinder is provided so as to be screwed onto the male threaded portions of both reinforcing bars. At least one reinforcing bar of the pair of reinforcing bars is a deformed reinforcing bar including a projection on an outer peripheral surface of a reinforcing bar main body. In the at least one reinforcing bar which is the deformed reinforcing bar, the projection on the outer peripheral surface is formed and a diameter enlarged portion which is larger in diameter than another portion is formed in a portion in a longitudinal direction by roll forming on an iron wire rod which is a raw material, an outer diameter of the diameter enlarged portion is not larger than a reinforcing bar outermost diameter including the projection of the reinforcing bar, and the male threaded portion is formed in the diameter enlarged portion by rolling.

According to the threaded reinforcing bar coupling having this configuration, since the end portion of the reinforcing bars is formed as the male threaded portion obtained by subjecting the diameter enlarged portion to thread forming, the diameter of the male threaded portion is larger than that obtained by conducting thread forming directly on the end portion, and desired strength of a connection portion is ensured. The male threaded portion is formed in the diameter enlarged portion of each reinforcing bar. Since the outer diameter of the diameter enlarged portion is not larger than the reinforcing bar outermost diameter which is the reinforcing bar outer diameter including the projection of the deformed reinforcing bar, when the deformed reinforcing bar is manufactured, it is possible to manufacture the deformed reinforcing bar as a diameter enlarged portion-equipped reinforcing bar. In other words, when the deformed reinforcing bar is formed by roll forming, the reinforcing bar that moves in the longitudinal direction in a red-hot heated state is guided such that the projection on the outer peripheral surface contact with guides. If a diameter enlarged portion having an outer diameter not smaller than that at the projection is present, the diameter enlarged portion contacts with the guides and thus rises, thereby bending the reinforcing bar. This bending remains to some extent even after the reinforcing bar is cooled, and thus a deformed reinforcing bar with bending is obtained. Therefore, such a thick diameter enlarged portion cannot be formed during manufacture of the reinforcing bar, and needs to be formed by heating/compression as described above after the manufacture of the reinforcing bar is completed. However, when the outer diameter of the diameter enlarged portion is not larger than the reinforcing bar outermost diameter which is the reinforcing bar outer diameter including the projection, the diameter enlarged portion does not contact with the guides to bend the reinforcing bar during manufacture of the reinforcing bar. Accordingly, it is possible to manufacture the deformed reinforcing bar as a diameter enlarged portion-equipped reinforcing bar when the deformed reinforcing bar is manufactured. Thus, it is unnecessary to provide a facility for the diameter enlarging process independently of a facility for manufacturing a reinforcing bar, the facility is simplified, and the productivity is also excellent.

In addition, since the male threaded portion of the reinforcing bar is a rolled thread, no material is removed and a decrease in a cross-sectional area at the thread groove is cancelled out by an increase in that at the thread ridge, unlike the case of cutting a thread groove. Accordingly, it is possible to enhance, as much as possible, the effect of reinforcement by the diameter enlargement in the limited condition that the outer diameter of the diameter enlarged portion is not larger than the reinforcing bar outermost diameter.

It should be noted that either one reinforcing bar of the pair of reinforcing bars connected to each other is not limited to a reinforcing bar in which a male threaded portion is formed in a diameter enlarged portion as described above, and may be any reinforcing bar having a male thread at a straight and portion. For example, in the case of connecting reinforcing bars having different diameters, the reinforcing bar having a larger diameter may be a reinforcing bar whose end portion is subjected to perfect circle processing and in which a male threaded portion is formed in the perfect circle processed portion. In addition, when either one reinforcing bar is a short reinforcing bar or the like used in a corner portion or the like of reinforced concrete, a little thicker reinforcing bar may be subjected to thread forming at both ends and used as the reinforcing bar.

In the present invention, in the at least one reinforcing bar which is the deformed reinforcing bar, a portion following a base end of the male threaded portion may be formed as an escape threaded portion in which a spiral escape groove which is engaged with a thread ridge of a female threaded portion of the threaded cylinder is formed on the projection on the outer peripheral surface by rolling. The length of the escape threaded portion is preferably not shorter than a length obtained by subtracting the length of the male threaded portion from the length of the threaded cylinder. It should be noted that the spiral escape groove does not need to have a shape that contributes to thread connection, but only needs to have a cross-sectional shape that allows the thread ridge of the threaded cylinder to escape, and may have a cross-sectional shape that allows a large gap to occur in an engaged portion.

In the portion of the deformed reinforcing bar that is formed as the escape threaded portion, an outer diameter of the reinforcing bar main body is preferably larger than that of a general portion in the deformed reinforcing bar.

If the escape threaded portion is provided as described above, when a connection operation is performed with the threaded cylinder, the threaded cylinder is screwed onto one of the reinforcing bars deeply to a position where the entirety of the threaded cylinder does not protrude from the reinforcing bar, without occurrence of a problem of interference with the projection of the deformed reinforcing bar. Then the other reinforcing bar is arranged so as to be opposed to the end portion of the one of the reinforcing bars, and the threaded cylinder is screwed back, whereby the threaded cylinder can be screwed on both reinforcing bars. According to such a connection method, when the threaded cylinder is rotated for joining, it is unnecessary to greatly move the reinforcing bar in the longitudinal direction in accordance with screwing.

In other words, in the present invention the male threaded portion is formed in the diameter enlarged portion whose outer diameter is not larger than the reinforcing bar outermost diameter including the projection of the deformed reinforcing bar, even when an attempt is made to screw the threaded cylinder to the depth side of the male threaded portion, since the inner diameter of the female threaded portion of the threaded cylinder is not larger than the reinforcing bar outermost diameter, the thread ridge of the threaded cylinder interferes with the projection of the deformed reinforcing bar, and the threaded cylinder cannot be screwed to the depth side of the male threaded portion. It is possible to avoid this interference by the escape threaded portion.

In addition, of the projections of the deformed reinforcing bar, a rib which is a projection extending along the longitudinal direction contributes to the cross-sectional area of the reinforcing bar, and in the case where the spiral escape groove is formed on the rib by cutting or the like, partial loss of area occurs due to the formation of the spiral escape groove, and there is the concern that the strength of this portion is insufficient when a tensile force is applied. However, in the case where the spiral escape groove is formed by rolling, the amount of the reinforcing bar material corresponding to the partial loss of area that occurs at the rib due to thread forming plastically flows in a circumferential direction to a portion that is located at the same position as the rib in the longitudinal direction. As a result, the entire cross-sectional area of the reinforcing bar is uniform regardless of forming of the spiral escape groove. Therefore, the problem is avoided that the strength is decreased due to the formation of the spiral escape groove.

It should be noted that it is not preferred that breakage eventually occurs at the portion of the deformed reinforcing bar where the escape threaded portion is formed. Thus in this portion, the outer diameter of the reinforcing bar main body except the protrusion having the escape threaded portion is preferably larger than that of the general portion in the deformed reinforcing bar. For example, a cross-sectional area equivalent to the cross-sectional area of the rib is preferably compensated for by making a root portion shallow.

It should be noted that also, when the length of the male threaded portion is increased, it is still possible to screw the threaded cylinder to a position where the threaded cylinder does not protrude from the reinforcing bar end surface. However, in this case, the adhesion performance, with respect to concrete, of a reinforcing bar portion that is the extended portion of the male threaded portion whose length is increased, is reduced as compared to the cross-sectional shape of the deformed reinforcing bar having the projection. A portion of the reinforcing bar that is not used for the coupling needs to ensure desired adhesion performance with respect to concrete which is the most major function of the deformed reinforcing bar.

Regarding this, with the configuration in which the spiral escape groove is formed on the projection on the outer peripheral surface of the reinforcing bar by rolling without an extension of the male threaded portion, it is possible to obtain both of two functions, namely, easiness of the connection operation for the coupling and a concrete adhesion function.

A threaded deformed reinforcing bar according to the present invention is a deformed reinforcing bar connected by the threaded reinforcing bar coupling according to the present invention. The deformed reinforcing bar includes: a projection on an outer peripheral surface of a reinforcing bar main body; and a male threaded portion at an end portion. The projection on the outer peripheral surface is formed and a diameter enlarged portion is formed in a portion in a longitudinal direction by roll forming on an iron wire rod which is a raw material, an outer diameter of the diameter enlarged portion is not larger than a reinforcing bar outermost diameter including the projection of the reinforcing bar, and the male threaded portion is formed in the diameter enlarged portion by rolling.

According to this configuration, the deformed reinforcing bar can be used for the threaded reinforcing bar coupling according to the present invention, and the outer diameter of the diameter enlarged portion is not larger than the reinforcing bar outermost diameter including the projection. Thus, when the deformed reinforcing bar is manufactured, it is possible to manufacture the deformed reinforcing bar as a diameter enlarged portion-equipped reinforcing bar. Therefore, it is unnecessary to provide a facility for the diameter enlarging process independently of a facility for manufacturing a reinforcing bar, the facility is simplified, and the productivity is also excellent. Moreover, since the male threaded portion is a rolled thread, no material is removed and a decrease in the cross-sectional area at the thread groove is cancelled out by an increase in that at the thread ridge, unlike the case of cutting a thread groove. Accordingly, it is possible to enhance, as much as possible, the effect of reinforcement by the diameter enlargement in the limited condition that the outer diameter of the diameter enlarged portion is not larger than the reinforcing bar outermost diameter.

In the threaded deformed reinforcing bar according to the present invention, a portion following a base end of the male threaded portion may be formed as an escape threaded portion in which a spiral escape groove which is to be engaged with a thread ridge of a female threaded portion of the threaded cylinder screwed onto the male threaded portion is formed on the projection on the outer peripheral surface by rolling.

In the case of this configuration, similarly as in the above description regarding the threaded reinforcing bar coupling, the following advantages are obtained: a connection operation in which the threaded cylinder is screwed to the depth side of the male threaded portion and then is screwed back can be performed to improve the workability of the connection operation, and it is possible to ensure a concrete adhesion function of the deformed reinforcing bar.

The threaded deformed reinforcing bar according to the present invention may further include, in an intermediate portion of the reinforcing bar in a longitudinal direction, a diameter enlarged portion in which a male threaded portion is not formed and which has the same diameter as that of the diameter enlarged portion that forms the male threaded portion.

When a reinforcing bar which includes the diameter enlarged portion and in which the male threaded portion is not formed is formed by roll forming, the diameter enlarged portion is formed per length of the outer periphery of a roller. Thus, in the deformed reinforcing bar longer than the axial length of the outer periphery of the roller, a diameter enlarged portion is present in an intermediate portion of the reinforcing bar in the longitudinal direction. The diameter enlarged portion in the intermediate portion of the reinforcing bar may be left such that a male threaded portion is not formed therein, and may be buried in concrete when the reinforcing bar is used.

The diameter enlarged portion which is provided in the intermediate portion of the reinforcing bar in the longitudinal direction and in which the male threaded portion is not formed may have the same length as that of the male threaded portion. In the case where the diameter enlarged portion in which the male threaded portion is not formed has the same length as that of the male threaded portion, when a reinforcing bar formed by roll forming is obtained by cutting, there is the disadvantage that a reinforcing bar that becomes a remnant occurs. However, since the length of the intermediate diameter enlarged portion in which a male threaded portion is not formed is short, a reduction in the anchorage performance of the diameter enlarged portion is small, and the over all anchorage performance with respect to concrete is excellent.

The diameter enlarged portion which is provided in the intermediate portion of the reinforcing bar in the longitudinal direction and in which a male threaded portion is not formed may have a length which is about twice as large as a length of the male threaded portion. A circumferential groove is preferably provided at the center, in the longitudinal direction, of the diameter enlarged portion in the intermediate portion.

Since the length of the diameter enlarged portion in the intermediate portion in the longitudinal direction is about twice as large as the length of the male threaded portion and, specifically, is a length obtained by adding a cutting margin to twice the length of the male threaded portion, when the reinforcing bar is divided into two portions at the diameter enlarged portion and the male threaded portion is formed by rolling, the male threaded portion can be obtained at the reinforcing bar end portion. Therefore, in the case where: in the roll forming process the roll forming is conducted regardless of the length of a reinforcing bar that is to be a product; and then the reinforcing bar is cut per length of the reinforcing bar that is to be the product, to obtain a plurality of reinforcing bars. In the cutting process the reinforcing bar is cut at the center of the diameter enlarged portion, and the male threaded portion is formed by rolling in the diameter enlarged portion that is cut at the center, whereby it is possible to efficiently produce a reinforcing bar having a desired length.

The diameter enlarged portion remaining in the intermediate portion of the reinforcing bar in the longitudinal direction may be buried in concrete as described above, but the diameter enlarged portion merely has a cylindrical shape, and thus an adhesive force thereof to concrete is low as compared to a deformed portion. However, when a circumferential groove is provided at the center of the diameter enlarged portion as described above, this is equivalent to provision of a node portion at one location, and the adhesive force is increased. In addition, when cutting is performed in the diameter enlarged portion and the male threaded portion is formed, the circumferential groove at the center of the diameter enlarged portion serves as a mark for the cutting, which leads to improvement of the workability of the cutting.

In the threaded deformed reinforcing bar according to the present invention, the threaded deformed reinforcing bar may include the male threaded portions at both ends thereof, the threaded cylinder connecting the threaded deformed reinforcing bar to another threaded deformed reinforcing bar may be screwed onto the male threaded portion at one of the ends, and an anchor plate which is to be a reinforcing bar head portion for anchoring in concrete may be screwed at a female threaded portion formed in an inner periphery thereof onto the male threaded portion at the other end.

In general, an end portion of a main reinforcement for a reinforced concrete beam or continuous footing is formed as a bent portion which is bent in an up-down or vertical direction for ensuring anchorage to concrete. However, the bent portion causes an increase in a reinforcing bar amount to be used and complication of bar arrangement. As a solution to such a problem, there is a method in which a reinforcing bar having a diameter-enlarged head portion at an end portion thereof is used to provide anchorage strength instead of the bent portion. This method is referred to as T head reinforcing bar method or mechanical reinforcing bar anchorage direction. However, the above diameter-enlarged head portion is processed by heating a reinforcing bar through high frequency induction heating and conducting pressure molding. Thus, the production requires much time and effort, and a large-scale production facility is needed. In contrast, when the anchor plate is screwed onto the male threaded portion provided at one end of the reinforcing bar as described above, the male threaded portion originally formed for connection with the threaded cylinder can be used, and a diameter-enlarged head portion for anchorage to concrete can be easily provided.

One method for manufacturing the threaded deformed reinforcing bar according to the present invention which includes a projection on an outer peripheral surface of a reinforcing bar main body and a male threaded portion at an end portion may include: conducting roll forming on an iron wire rod which is a raw material, to form the projection on the outer peripheral surface and to form a diameter enlarged portion in a portion in a longitudinal direction; setting an outer diameter of the diameter enlarged portion to be not larger than a reinforcing bar outermost diameter including the projection of the reinforcing bar; cutting the diameter enlarged portion at its end portion; and forming the male threaded portion in the diameter enlarged portion of the cut deformed reinforcing bar by rolling.

In the case of this method, when the deformed reinforcing bar is manufactured, the deformed reinforcing bar is manufactured as a diameter enlarged portion-equipped reinforcing bar. Thus, it is unnecessary to provide a facility for the diameter enlarging process independently of a facility for manufacturing a reinforcing bar, the facility is simplified, and the productivity is also excellent. Since the outer diameter of each diameter enlarged portion is not larger than the reinforcing bar outermost diameter including the projection, when the deformed reinforcing bar is manufactured, it is possible to manufacture the deformed reinforcing bar as a diameter enlarged portion-equipped reinforcing bar. In addition, since the male thread is formed by rolling, no material is removed and a decrease in the cross-sectional area at the thread groove is cancelled out by an increase in that at the thread ridge, unlike the case of cutting a thread groove. Accordingly, it is possible to enhance, as much as possible, the effect of reinforcement by the diameter enlargement in the limited condition that the outer diameter of the diameter enlarged portion is not larger than the reinforcing bar outermost diameter. In the case of this method, when a plurality of threaded deformed reinforcing bars in each of which the male threaded portions are formed at both ends are obtained from a raw material reinforcing bar which is formed by roll forming as described below, there is the disadvantage that a reinforcing bar that becomes a remnant occurs. However, in each manufactured threaded deformed reinforcing bar, since the length of the intermediate diameter enlarged portion in which a male threaded portion is not formed is short, a reduction in the anchorage performance of the diameter enlarged portion is small, and the anchorage performance with respect to concrete is excellent.

In the method according to the present invention, a raw material reinforcing bar including the diameter enlarged portions at a plurality of locations in an intermediate portion thereof in the longitudinal direction may be formed by roll forming with a plurality of rotations of roll forming rollers. The raw material deformed reinforcing bar may be cut at an end portion, in the longitudinal direction, of the diameter enlarged portion at an optional location, and the male threaded portion may be formed in the diameter enlarged portion at the cut location by rolling. In the case of this manufacturing method, there is the disadvantage that a reinforcing bar that becomes a remnant occurs as described above, but it is possible to efficiently produce threaded deformed reinforcing bars having various lengths.

Another method for manufacturing the threaded deformed reinforcing bar according to the present invention which includes a projection on an outer peripheral surface of a reinforcing bar main body and a male threaded portion at an end portion includes: conducting roll forming on an iron wire rod which is a raw material, to form the projection on the outer peripheral surface and to form a diameter enlarged portion in a portion in a longitudinal direction; setting an outer diameter of the diameter enlarged portion to be not larger than a reinforcing bar outermost diameter including the projection of the reinforcing bar; cutting the diameter enlarged portion at its intermediate portion; and forming the male threaded portion in the diameter enlarged portion of each cut deformed reinforcing bar by rolling.

In the case of this method as well, when the deformed reinforcing bar is manufactured, the deformed reinforcing bar is manufactured as a diameter enlarged portion-equipped reinforcing bar. Thus, it is unnecessary to provide a facility for the diameter enlarging process independently of a facility for manufacturing a reinforcing bar, the facility is simplified, and the productivity is also excellent. Since the outer diameter of the diameter enlarged portion is not larger than the reinforcing bar outermost diameter including the projection, when the deformed reinforcing bar is manufactured, it is possible to manufacture the deformed reinforcing bar as a diameter enlarged portion-equipped reinforcing bar. In addition, since the male thread is formed by rolling, no material is removed and a decrease in the cross-sectional area at the thread groove is cancelled out by an increase in that at the thread ridge, unlike the case of cutting a thread groove. Thus it is possible to enhance, as much as possible, the effect of reinforcement by the diameter enlargement in the limited condition where the outer diameter of the diameter enlarged portion is not larger than the reinforcing bar outermost diameter. In the case of this manufacturing method, the diameter enlarged portion is cut at its intermediate portion and the male threaded portion is formed in the diameter enlarged portion of each cut deformed reinforcing bar by rolling. Thus, it is possible to obtain a plurality of threaded deformed reinforcing bars, in each of which the male threaded portions are formed at both ends, by cutting the raw material reinforcing bar formed by roll forming without occurrence of a remnant.

In this manufacturing method, a raw material reinforcing bar including the diameter enlarged portions at a plurality of locations in an intermediate portion thereof in the longitudinal direction may be formed by roll forming with a plurality of rotations of roll forming rollers, the raw material reinforcing bar may be cut at a center, in the longitudinal direction, of the diameter enlarged portion at an optional location, and the male threaded portion may be formed in the diameter enlarged portion at the cut location by rolling. According to this manufacturing method, it is possible to efficiently produce threaded deformed reinforcing bars having various lengths.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1A is a cross-sectional view of a threaded reinforcing bar coupling for a deformed reinforcing bar according to a first embodiment of the present invention;
Fig. 1B is a cross-sectional view showing a connection process in Fig. 1A;
Fig. 1C is a cross-sectional view of a deformed reinforcing bar in Fig. 1A;
Fig. 2 is an exploded cross-sectional view of the threaded reinforcing bar coupling for a deformed reinforcing bar;
Fig. 3 is a cross-sectional view of a threaded reinforcing bar coupling for a deformed reinforcing bar according to a second embodiment of the present invention;
Fig. 4 is a cross-sectional view of a threaded reinforcing bar coupling for a deformed reinforcing bar according to a third embodiment of the present invention;
Fig. 5 is a cross-sectional view of a reinforcing bar head portion using a male threaded portion of the deformed reinforcing bar;
Fig. 6 is a cutaway side view of the reinforcing bar in which an intermediate portion thereof is omitted;
Fig. 7 is a step diagram illustrating a manufacturing process of a deformed reinforcing bar used in the threaded reinforcing bar coupling for a deformed reinforcing bar according to the first embodiment;
Fig. 8 is a diagram illustrating a roll forming process in the manufacturing process;
Fig. 9 is a diagram illustrating a rolling process of a thread groove in the manufacturing process;
Fig. 10 is a cross-sectional view of a threaded reinforcing bar coupling for a deformed reinforcing bar according to a fourth embodiment of the present invention;
Fig. 11 is a cross-sectional view of a threaded reinforcing bar coupling for a deformed reinforcing bar according to a fifth embodiment of the present invention;
Fig. 12 is a partial side view of a deformed reinforcing bar used in the threaded reinforcing bar coupling;
Fig. 13A is a cross-sectional view along XIII A-XIIIA line in Fig. 12;
Fig. 13B is a cross-sectional view along XIII B-XIIIB line in Fig. 12;
Fig. 13C is a cross-sectional view along XIII C-XIIIC line in Fig. 12;
Fig. 14 is a side view of the deformed reinforcing bar in which an intermediate portion thereof is omitted;
Fig. 15 is a diagram illustrating a manufacturing process of a reinforcing bar according to a sixth embodiment of the present invention;
Fig. 16 is a side view of the reinforcing bar in which an intermediate portion thereof is omitted;
Fig. 17 is a diagram illustrating a manufacturing process of a reinforcing bar according to a seventh embodiment of the present invention;
Fig. 18 is a side view of the reinforcing bar in which an intermediate portion thereof is omitted;
Fig. 19 is a side view of a part of a reinforcing bar according to an eighth embodiment of the present invention;
Fig. 20 is a cross-sectional view of a threaded reinforcing bar coupling for a deformed reinforcing bar according to a ninth embodiment of the present invention; and
Fig. 21 is a cutaway side view of a threaded reinforcing bar coupling for a deformed reinforcing bar and reinforcing bars according to a tenth embodiment of the present invention.

### DESCRIPTION OF EMBODIMENTS

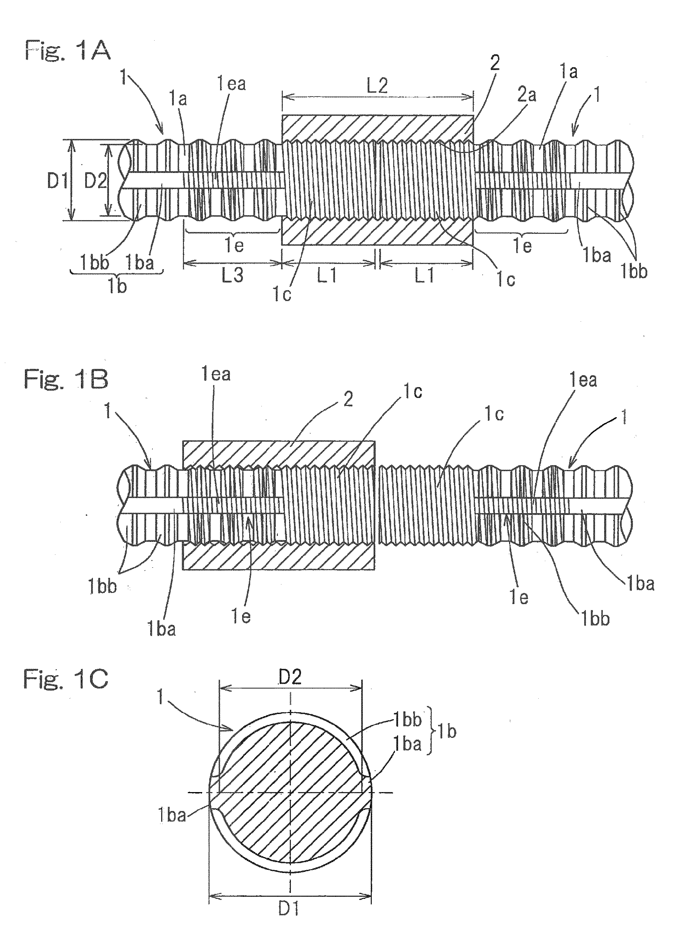

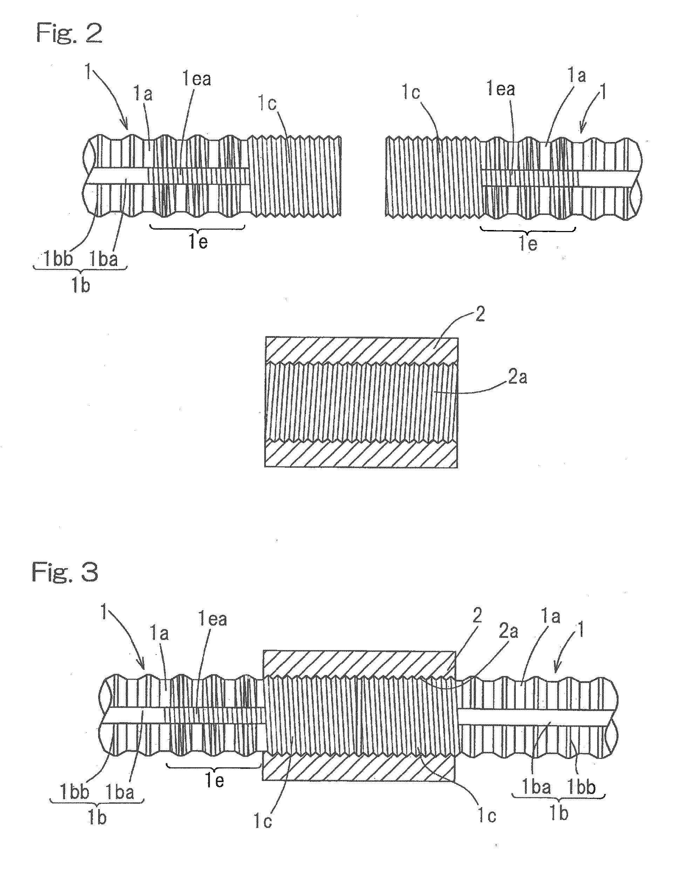

A first embodiment of the present invention will be described with reference to Figs. 1A, 1B, 1C, and 2. A threaded reinforcing bar coupling for a deformed reinforcing bar thereof is a reinforcing bar coupling which connects a pair of reinforcing bars 1, 1 with a threaded cylinder 2. Each reinforcing bar 1 is a deformed reinforcing bar which includes, on the outer peripheral surface of a reinforcing bar main body 1a, projections 1b such as ribs 1ba extending along a longitudinal direction and nodes 1bb extending along a circumferential direction. The nodes 1bb are provided so as to be spaced apart from each other in the longitudinal direction at equal intervals. In the illustrated example, the ribs 1ba extending along the longitudinal direction are provided at two locations away from each other in the circumferential direction, but may be provided at three or four locations away from each other in the circumferential direction. Each node 1bb is formed in a circular shape extending along the entire periphery. However, each node 1bb may be formed in a semicircular shape, and the semicircular nodes may be provided alternately in the longitudinal direction at a half portion of the outer periphery of the reinforcing bar and at the other half portion thereof.

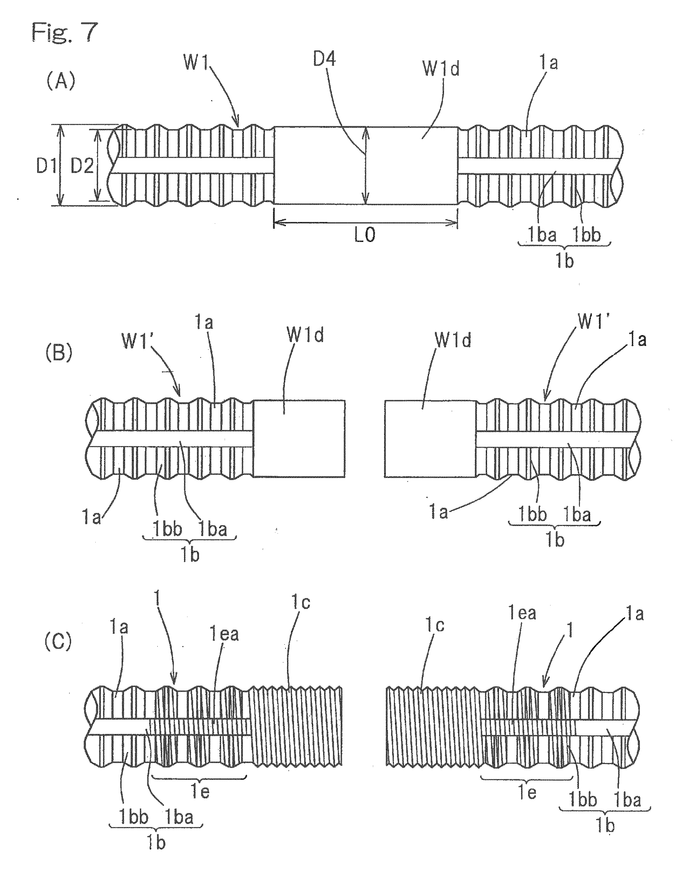

Each of opposed end portions of the pair of reinforcing bars 1, 1 connected to each other is a male threaded portion 1c obtained by subjecting a diameter enlarged portion W1d (Fig. 7) to thread forming, the diameter enlarged portion W1d having a diameter that is not larger than a reinforcing bar outermost diameter D1 which is the outer diameter of the reinforcing bar including the projections 1b and that is not smaller than the outer diameter D2 of the reinforcing bar main body 1a. The male threaded portion 1c is a rolled thread.

The projections 1b of each reinforcing bar 1 and the diameter enlarged portion W1d forming the male threaded portion 1c are produced by roll forming when each reinforcing bar 1 is manufactured as described later.

A dimensional example will be described. In the case where the outer diameter D2 of the reinforcing bar main body 1 a of each reinforcing bar 1 is 15.2 mm and the reinforcing bar outermost diameter D1 is 17.6 mm (the heights of the ribs 1ba and the nodes 1bb are 1.2 mm), the outer diameter of the diameter enlarged portion W1d (Fig.7) forming the male threaded portion 1c is set at 16.3 mm.

It should be noted that the outer diameter of the male threaded portion 1c of each reinforcing bar 1 is not larger than the reinforcing bar outermost diameter D1 and not smaller than the outer diameter D2 of the reinforcing bar main body in a completed state. But in the case of a rolled thread, the outer diameter of the male threaded portion 1c does not necessarily need to be not larger than the reinforcing bar outermost diameter D1 in the completed state, and only needs to be not larger than the reinforcing bar outermost diameter D1 in a state of the diameter enlarged portion W1d before rolling. In the case of a rolled thread, the outer diameter of a thread ridge after rolling may be larger than the outer diameter of a raw material, and the reason for limiting the outer diameter of the diameter enlarged portion W1d is for convenience of a process of roll forming before forming the male threaded portion 1c by rolling. The groove bottom diameter of the male threaded portion 1 c of each reinforcing bar 1 is not smaller than the outer diameter D2 of the reinforcing bar main body 1 a of the reinforcing bar 1.

In this embodiment, the male threaded portions 1 c of both reinforcing bars 1 have the same diameter and the same pitch, and the spiral directions thereof are the same. In addition, the length L1 of the male threaded portion 1c of each reinforcing bar 1 is set so that a total length 2L1 plus a length corresponding to a gap generated between end surfaces of both reinforcing bars 1, 1 equals to the length L2 of the threaded cylinder. It should be noted that the diameters, the pitches, and the spiral directions of the male threaded portions 1c, 1c of both reinforcing bars 1 may be different from each other. For example, the male threaded portions 1c, 1c of both reinforcing bars 1 may be threaded so as to be inverse to each other.

A portion of each reinforcing bar 1 that follows a base end of the male threaded portion 1c is formed as an escape threaded portion 1e. The escape threaded portion 1e is a portion in which a spiral escape groove 1ea to be engaged with a thread ridge of a female threaded portion 2a of the threaded cylinder 2 is formed by rolling on the projections 1b such as the ribs 1ba and the nodes 1bb on the outer peripheral surface of the reinforcing bar 1. The length L3 of the escape threaded portion 1e is a length obtained by subtracting the length L1 of the male threaded portion 1c from the length L2 of the threaded cylinder 2, or a length slightly longer than this length.

A cross-sectional shape of the spiral escape groove 1ea is the same as that of a thread groove of the male threaded portion 1c in this example, but does not need to be a shape that contributes to thread connection. The cross-sectional shape of the spiral escape groove 1ea only needs to be a cross-sectional shape that allows the thread ridge of the threaded cylinder 2 to escape, and may be a cross-sectional shape that allows a large gap to occur in an engaged portion between the thread ridges of the threaded cylinder 2 and the escape grooves 1ea.

It should be noted that the groove bottom diameter of the spiral escape groove 1ea of the escape threaded portion 1e is not smaller than the outer diameter D2 of the reinforcing bar main body 1a, but may be made smaller than the outer diameter D2 of the reinforcing bar main body 1a due to a roll forming error or the like. This is because, since the spiral escape groove 1ea is formed by rolling, the cross-sectional dimension of the reinforcing bar 1 does not change regardless of the groove bottom diameter.

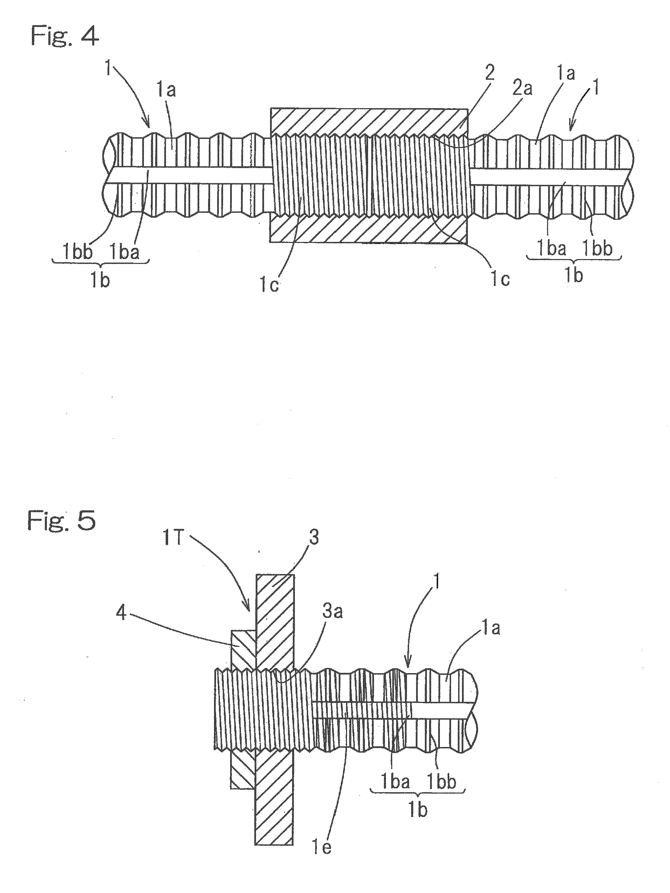

As shown in Fig. 3, the escape threaded portion 1e may be provided in only one of both reinforcing bars 1, 1 screwed into the threaded cylinder 2, or as shown in Fig. 4, no escape threaded portion 1e may be provided in either of the reinforcing bars 1, 1.

The threaded cylinder 2 is a cylindrical steel member in which the female threaded portion 2a is continuously formed on an inner periphery thereof over substantially the overall length thereof. It should be noted that the female threaded portion 2a may have an inverse thread as described above. Each of cross-sectional shapes of the female threaded portion 2a of the threaded cylinder 2 and the male threaded portion 1c of each reinforcing bar 1 may be a triangular shape, a trapezoidal shape, a rectangular shape, or a curved shape.

In each reinforcing bar 1, the male threaded portions 1c, 1c are formed at both ends thereof and, for example, have dimensions that conform to a plurality of types of standards, but the male threaded portion 1c may be formed at only one end thereof.

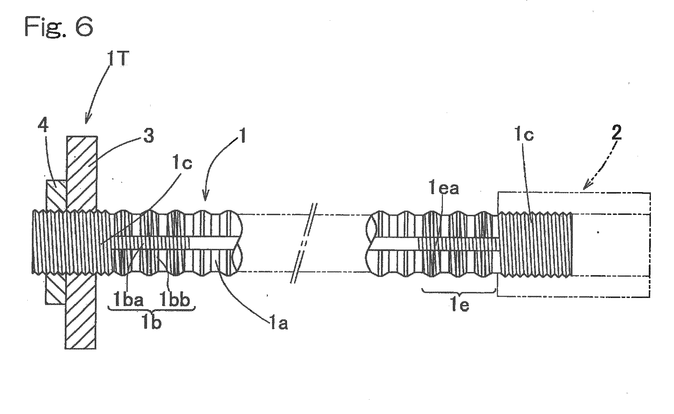

As shown in Figs. 5 and 6, the male threaded portion 1c of each reinforcing bar 1 may be used for forming a diameter-enlarged reinforcing bar head portion IT for anchorage to concrete. Specifically, an anchor plate 3 may be screwed at a female threaded portion 3a formed on an inner periphery of the anchor plate 3. The diameter-enlarged reinforcing bar head portion IT includes the anchor plate 3 and a stationary plate 4 which is stacked on the anchor plate 3 and serves as a lock nut screwed onto the male threaded portion 1c of the reinforcing bar 1. It should be noted that the stationary plate 4 may not necessarily be provided.

The threaded cylinder 2 of the reinforcing bar coupling is screwed onto the male threaded portion 1 c at the other end of the reinforcing bar 1. It should be noted that each of the male threaded portions 1c at both ends of the reinforcing bar 1 may be used for the diameter-enlarged head portion 1T including the anchor plate 3 and the stationary plate 4.

Next, a manufacturing method of the reinforcing bar 1 including the male threaded portion 1c will be described. As shown in Fig. 7, when an elongate raw material deformed reinforcing bar W1 is manufactured, each of portions of the reinforcing bar main body 1a having a length range L0 at a plurality of locations in the longitudinal direction is formed as a diameter enlarged portion W1d whose outer diameter D4 is not larger than the reinforcing bar outermost diameter D1 which is an outer diameter including the projections 1b and is not smaller than the outer diameter D2 of the reinforcing bar main body 1a in other portions. The length range L0 in which the diameter enlarged portion W1d is formed is a length obtained by adding a cutting margin for later cutting to twice the length L1 of the male threaded portion 1c.

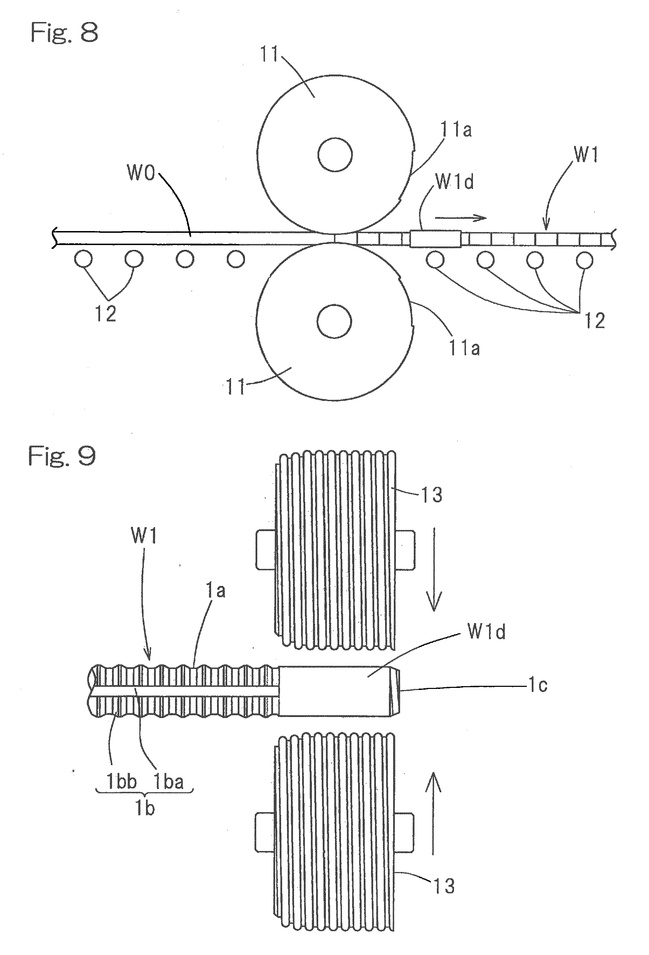

As shown in Fig. 8, the projections 1b are formed in the raw material deformed reinforcing bar W1 through rolling by roll forming by passing a cylindrical-shaped iron wire rod W0, which is a raw material, between forming rollers 11, 11. The wire rod W0 is heated, and then this forming is conducted in a hot state. In the process of roll forming with the forming rollers 11, 11, the diameter enlarged portions W1d are provided. Specifically, the forming rollers 11, 11 have outer peripheral surfaces which are forming mold surfaces on which recesses (not shown) for forming the projections 1b of the reinforcing bar 1 are provided, and portions of the outer peripheral surfaces of the forming rollers 11, 11 in the circumferential direction are formed as recesses 11a for forming a diameter enlarged portion. The circumferential length of each recess 11a for forming a diameter enlarged portion is set at the length (L0) of each diameter enlarged portion W1d to be formed. When such forming rollers 11, 11 are used, in the raw material deformed reinforcing bar W1 formed through the passing, portions in the longitudinal direction are formed as the diameter enlarged portions W1d, and the projections 1b are formed at other portions.

Since the outer diameter of the diameter enlarged portion W1d is not larger than the reinforcing bar outermost diameter D1, when the elongate raw material deformed reinforcing bar W1 is manufactured by roll forming, the diameter enlarged portions W1d do not contact with guides 12 such as rollers which contact with the projections 1b of the raw material deformed reinforcing bar W1 and guide the raw material deformed reinforcing bar W1 that is in a heated state. Therefore, it is possible to manufacture the deformed reinforcing bar W1 without causing a problem of bending of the deformed reinforcing bar W1 due to the diameter enlarged portions W1d contacting with the guides 12.

The raw material deformed reinforcing bar W1 so manufactured is cut at the midpoint or a center of each diameter enlarged portion W1d, to obtain a plurality of diameter enlarged portion-equipped deformed reinforcing bars W1' (Fig.7) having a predetermined length and including the diameter enlarged portions W1d at both ends thereof. When the diameter enlarged portion-equipped deformed reinforcing bars W1' having a predetermined length are used, for example, for foundation of a building such as a house, the length of each diameter enlarged portion-equipped deformed reinforcing bar W1' is preferably set at a multiple of a module (e.g., 910 mm, 1000 mm, etc.) of the building for which module design is performed, or at a multiple of 1/2 of the module.

The diameter enlarged portions W1d of each cut diameter enlarged portion-equipped deformed reinforcing bar W1' so cut out are subjected to rolling between a pair of rolling rollers 13, 13 as shown in Fig. 9, whereby a reinforcing bar 1 including the diameter-enlarged male threaded portions 1c at both ends thereof is obtained. The pair of rolling rollers 13, 13 are arranged so as to be spaced apart from each other as shown in Fig. 9. After the diameter enlarged portion W1d is positioned between the rolling rollers 13, 13, both rolling rollers 13, 13 are pressed against the diameter enlarged portion W1d by being moved in a radial direction as shown by arrows while being rotated. At the rolling, even after the male threaded portion 1c is formed by rolling, the diameter enlarged portion-equipped deformed reinforcing bar W1' is fed between the rolling rollers 13, 13, and the escape threaded portion 1e (Fig. 1A) following the male threaded portion 1c is formed by rolling.

According to the threaded reinforcing bar coupling for a deformed reinforcing bar having this configuration, since the end portions of each reinforcing bar 1 are formed as the male threaded portions 1c obtained by subjecting the diameter enlarged portions W1d to thread forming, the diameter of each male threaded portion 1c is larger than that obtained by conducting thread forming directly on the end portion, and desired strength of a connection portion is ensured. The male threaded portion 1c is formed in each diameter enlarged portion W1d of each reinforcing bar 1. Since the outer diameter of the diameter enlarged portion W1d is not larger than the reinforcing bar outermost diameter D1 which is the reinforcing bar outer diameter including the projections 1b of the deformed reinforcing bar 1, when the raw material deformed reinforcing bar W1 is manufactured, it is possible to manufacture the raw material deformed reinforcing bar W1 as a diameter enlarged portion-equipped reinforcing bar. In other words, when the raw material deformed reinforcing bar W1 is formed by roll forming as described above with reference to Fig. 8, the reinforcing bar that moves in the longitudinal direction in a red-hot heated state is guided such that the projections 1b on the outer peripheral surface contact with the guides 12. If a diameter enlarged portion having an outer diameter not smaller than that at the projections 1b is present, the diameter enlarged portion contacts with the guides and thus rises, thereby bending the reinforcing bar. This bending remains to some extent even after the reinforcing bar is cooled, resulting in a deformed reinforcing bar in which bending remains. Therefore, such a thick diameter enlarged portion cannot be formed during manufacture of the reinforcing bar, and needs to be formed by heating/compression as described above after the manufacture of the reinforcing bar is completed. However, when the outer diameter of the diameter enlarged portion W1d is not larger than the reinforcing bar outermost diameter D1 which is the reinforcing bar outer diameter including the projections 1b, the diameter enlarged portion W1d does not contact with the guides 12 to bend the reinforcing bar during manufacture of the reinforcing bar, and therefore, it is possible to manufacture the raw material deformed reinforcing bar W1 as a diameter enlarged portion-equipped reinforcing bar when the raw material deformed reinforcing bar W1 is manufactured. Thus, it is unnecessary to provide a facility for the diameter enlarging process independently of a facility for manufacturing a reinforcing bar, the facility is simplified, and the productivity is also excellent.

In addition, since each male threaded portion 1c of each reinforcing bar 1 is a rolled thread, no material is removed and the cross-sectional area is cancelled out between the thread groove and the thread ridge unlike the case of machining a thread groove. Accordingly, it is possible to enhance, as much as possible, the effect of reinforcement by the diameter enlargement in the limited condition that the outer diameter of the diameter enlarged portion W1d is not larger than the reinforcing bar outermost diameter.

In a joining operation for the threaded reinforcing bar coupling, as shown in Fig. 1B, the threaded cylinder 2 is screwed onto the male threaded portion 1c of either one of the reinforcing bars 1 deeply to a position where the threaded cylinder 2 does not protrude from the end surface of the reinforcing bar 1. In this state, both reinforcing bars 1, 1 are arranged so as to be substantially butted against each other. Then, the threaded cylinder 2 is screwed back such that the threaded cylinder 2 is screwed on the male threaded portions 1c, 1c of both reinforcing bars 1, 1. By so doing, the joining is completed. When the method is used in which the nut 2 is screwed back such that the nut 2 is screwed on the male threaded portions 1c, 1c of both reinforcing bars 1, 1 as described above, it is unnecessary to move, in accordance with screwing, the reinforcing bar by a length of the screwing. Therefore, the connection operation can be easily performed.

It should be noted that when the threaded cylinder 2 is screwed back for connection, the connection cannot be made unless the phases of the thread grooves of the male threaded portions 1c, 1c of the pair of opposed reinforcing bars 1, 1 match each other. However, in the case of reinforcing bars in a state of being arranged and assembled before concrete is cast for continuous footing, a beam, or the like, the reinforcing bars are movable in the axial direction by about 2 to 3 mm. If such movement is possible, the pair of opposed reinforcing bars 1, 1 are allowed to be adjusted to a position where the phases of the thread grooves of the male threaded portions 1c, 1c of the pair of the opposed reinforcing bars 1, 1 match each other, and thus the connection is made possible.

In addition, since each male threaded portion 1c is formed in the diameter enlarged portion W1d whose outer diameter is not larger than the reinforcing bar outermost diameter D1, the groove bottom diameter of the thread groove is smaller than the reinforcing bar outermost diameter D1. Thus, when the threaded cylinder 2 is screwed onto the male threaded portion 1c of either one of the reinforcing bars deeply to the position where the threaded cylinder 2 does not protrude from the end surface of the reinforcing bar as shown in Fig. 1B, the problem arises that the threaded cylinder 2 interferes with the projections 1b of the deformed reinforcing bar 1.

However, in this embodiment, since the portion of the reinforcing bar 1 that follows the male threaded portion 1c is formed as the escape threaded portion 1e, it is possible to deeply screw the threaded cylinder 2 without the thread ridge of the female threaded portion 2a of the threaded cylinder 2 interfering with the ribs 1ba or the nodes 1bb.

Although partial loss of area occurs at the ribs 1ba and the like due to the formation of the escape threaded portion 1 e, since the escape threaded portion 1e is formed by rolling, no problem arises due to the partial loss of area. In other words, of the projections 1b of the deformed reinforcing bar 1, the ribs 1ba, which are projections extending along the longitudinal direction, contribute to the cross-sectional area of the reinforcing bar, and in the case where the spiral escape groove is formed on the ribs by cutting or the like, partial loss of area occurs due to the formation of the spiral escape groove, and there is the concern that the strength of this portion is insufficient when a tensile force is applied. However, in the case where the spiral escape groove 1 ea is formed by rolling, the amount of the reinforcing bar material corresponding to the partial loss of area that occurs at the ribs 1ba due to thread forming plastically flows in the circumferential direction at the same longitudinal position as the ribs 1ba. Accordingly, the entire cross-sectional area of the reinforcing bar is rendered to be uniform regardless of forming of the spiral escape groove 1ea. Therefore, the problem is avoided that the strength is decreased due to the formation of the spiral escape groove.

It should be noted that also, when the length of the male threaded portion 1c is increased, it is still possible to screw the threaded cylinder to a position where the threaded cylinder does not protrude from the reinforcing bar end surface. However, in this case, the adhesion performance, with respect to concrete, of a reinforcing bar portion that is the extended portion of the male threaded portion 1c whose length is increased, is reduced as compared to the cross-sectional shape of the deformed reinforcing bar having the projection. A portion of the reinforcing bar 1 that is not used for the coupling needs to ensure desired adhesion performance with respect to concrete which is the most major function of the deformed reinforcing bar. Regarding this, with the configuration in which the spiral escape groove 1ea is formed on the projections 1b on the outer peripheral surface of the reinforcing bar by rolling without an extension of the male threaded portion, it is possible to obtain both of two functions, namely, easiness of the connection operation for the coupling and a concrete adhesion function.

In addition, according to the manufacturing method of the threaded deformed reinforcing bar, when the raw material deformed reinforcing bar W1 is manufactured, the this reinforcing bar W1 is manufactured as a reinforcing bar with the diameter enlarged portions W1d. Thus, it is unnecessary to provide a facility for the diameter enlarging process independently of a facility for manufacturing a reinforcing bar, the facility is simplified, and the productivity is also excellent. Since the outer diameter of each diameter enlarged portion W1d is not larger than the reinforcing bar outermost diameter D1 including the projections 1b, when the deformed reinforcing bar W1 is manufactured, it is possible to manufacture the deformed reinforcing bar W1 as a diameter enlarged portion-equipped reinforcing bar. In addition, since the male threaded portion 1c is formed by rolling, no material is removed and the cross-sectional area is cancelled out between the thread groove and the thread ridge unlike the case of cutting a thread groove. Accordingly, it is possible to enhance, as much as possible, the effect of reinforcement by the diameter enlargement in the limited condition where the outer diameter of the diameter enlarged portion is not larger than the reinforcing bar outermost diameter.

It should be noted that it is preferred to form the diameter enlarged portions W1d in the manufacturing process of the deformed reinforcing bar W1 as described above in the case where the outer diameter D2 of the reinforcing bar main body is not larger than 32 mm. In the case of a reinforcing bar having an outer diameter of 32 mm or smaller, the operation of forming the diameter enlarged portions W1d in the manufacturing process of the deformed reinforcing bar W1 can be easily performed without occurrence of distortion or the like.

Such a small-diameter deformed reinforcing bar 1 can be used for continuous footing or the like of a house, and the threaded reinforcing bar coupling according to the above-described embodiments can be effectively used. In addition, for a reinforcing bar coupling, grades are specified in a building standard or the like in accordance with a use place. In a reinforcing bar coupling with a low grade equal to or lower than B grade, not with a high grade such as SA grade or A grade, high accuracy is not required as compared to SA grade and A grade. With a small diameter (narrow diameter), backlash or the like is small, and hence it is possible to sufficiently ensure A grade. Thus, even when preprocessing of forming into a perfect circle is omitted in some cases and thread forming by rolling is conducted directly on the diameter enlarged portion W1d formed in the reinforcing bar manufacturing process as described above, it is possible to obtain the male threaded portion 1c with desired accuracy. In a reinforcing bar coupling for a reinforcing bar in continuous footing of a house, the grade may be equal to or lower than B grade, and thus the threaded reinforcing bar coupling according to the above-described embodiments can be effectively used.

In addition, in each embodiment described above, the male threaded portions 1c are formed by rolling in the diameter enlarged portions W1d of both reinforcing bars 1, 1 to be connected, but either one of the reinforcing bars is not limited to the reinforcing bar in which the male threaded portion is formed in the diameter enlarged portion W1d, but may be any reinforcing bar having a male thread.

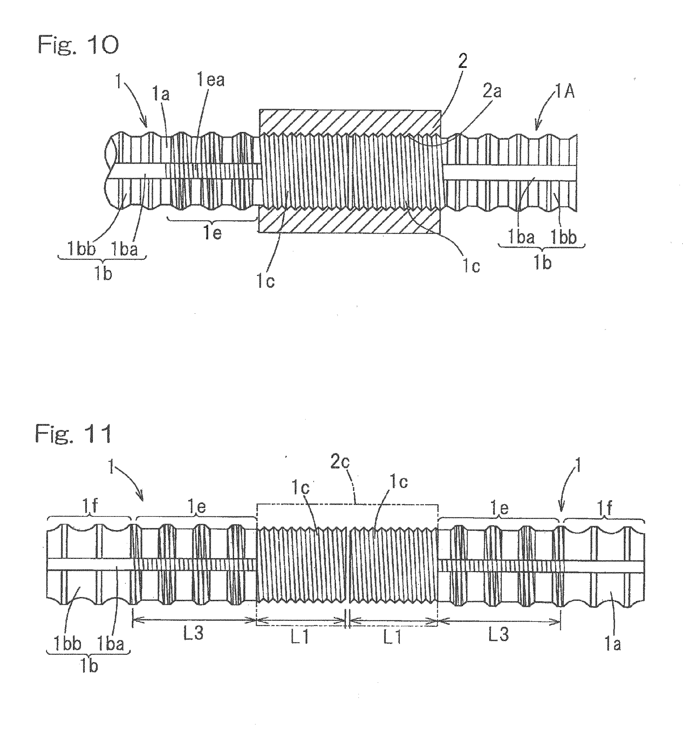

For example, as shown in Fig. 10, in the case of connecting reinforcing bars 1, 1A having different diameters, the reinforcing bar 1A having a larger diameter may be a reinforcing bar whose end portion, which is not a diameter enlarged portion, is subjected to perfect circle processing and in which a male threaded portion is formed in the perfect circle processed portion.

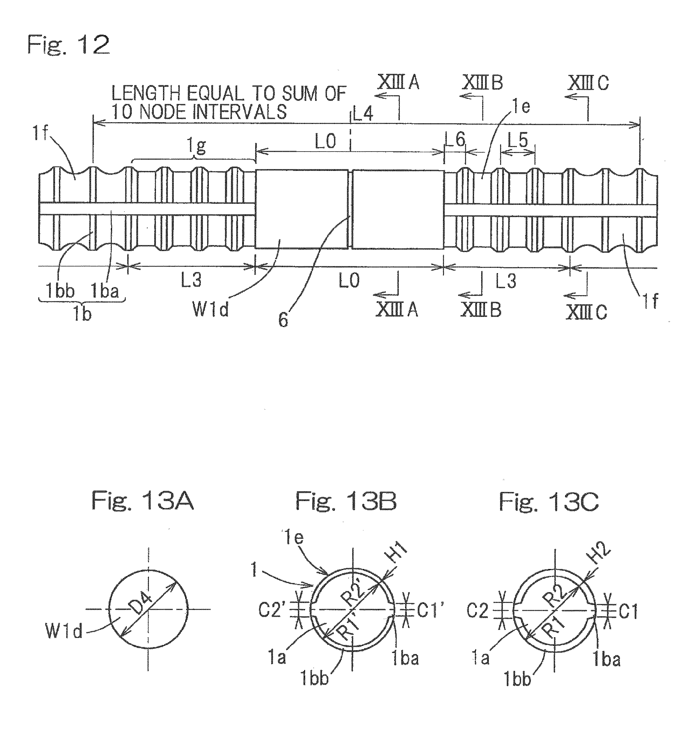

Figs. 11 to 14 further illustrate a fifth embodiment. A threaded reinforcing bar coupling for a deformed reinforcing bar thereof is a reinforcing bar coupling in which, in the portion of the reinforcing bar 1 that is formed as the escape threaded portion 1e in the embodiment in Fig. 1A, the outer diameter of the reinforcing bar main body 1a is made larger than that of a general portion 1 f of the reinforcing bar 1 other than the escaped threaded portion 1e and the male threaded portion 1c. Fig. 12 shows the shapes of reinforcing bars before the male threaded portions 1c and the spiral escape grooves 1ea are formed by rolling. An escape thread unformed portion of the raw material deformed reinforcing bar W1 in which the escape threaded portion 1e to be formed is designated by a reference sign "1g".

The outer diameter (radius) R2', shown in Fig.13B, of the portion which is to be the escape threaded portion 1e is larger than the outer diameter (radius) R2, shown in Fig.13C, of a smallest-diameter portion of the reinforcing bar main body 1a of the general portion 1f. In other words, in the portion which is to be the escape threaded portion 1e, the depth H2 of a root portion between the adjacent nodes 1bb is smaller than the depth H1 of a root portion in the general portion 1f. In this manner, a cross-sectional area equivalent to or larger than the cross-sectional area of the ribs 1ba or a cross-sectional area is compensated for by making the root portion shallow.

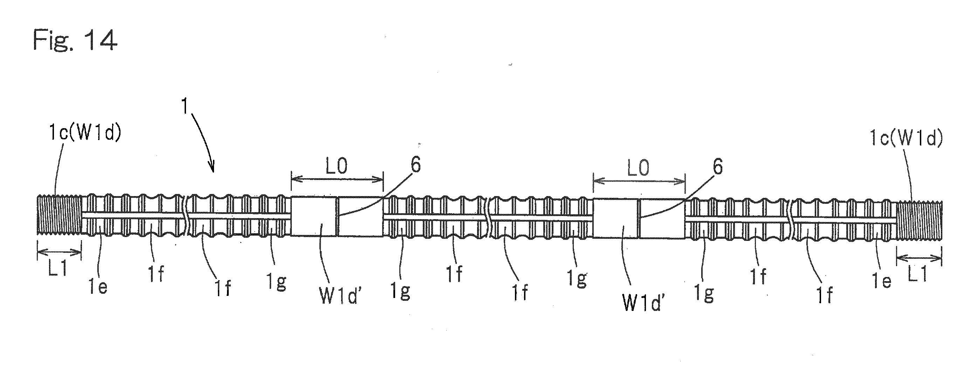

In addition, as shown in Fig. 14, in the reinforcing bar 1, a diameter enlarged portion W1d' in which a male threaded portion is not formed and which has the same diameter as that of the diameter enlarged portion W1d which forms the male threaded portion 1c is provided at one location or a plurality of locations in an intermediate portion in the reinforcing bar longitudinal direction. Each intermediate diameter enlarged portion W1d' has a length L0 which is substantially twice as large as the length L1 of the male threaded portion 1c and, specifically, is a length obtained by adding a cutting margin to twice the length L1 of the male threaded portion 1c. Each of the pitches of the diameter enlarged portions W1d and W1d' is set, for example, at an integral multiple of a module of a building (e.g., 910 mm, 1000 mm, etc.). It should be noted that the reference signs "W1d" and "W1d' " for the diameter enlarged portions are indicated with and without " ' " in order to distinguish between the intermediate portions and the end portions in Fig. 14, but the reference sign of " ' " is sometimes omitted except for the case where it is particularly necessary to distinguish between the intermediate portion and the end portions.

A circumferential groove 6 is provided at the center of each intermediate diameter enlarged portion W1d' in the longitudinal direction. A cross-sectional shape of the circumferential groove 6 is, for example, a trapezoidal shape. Regarding the dimension of the circumferential groove 6, for example, a groove width B6 thereof is 3 mm even when the reinforcing bar1 has any one of diameters 16mm, 19mm and 22mm.

The reinforcing bar 1 in Fig. 14 is obtained by roll forming as described above with reference to Fig. 8. A circumferential groove mold portion (not shown) is provided in each forming roller 11, and the circumferential groove 6 is also formed during the roll forming. In addition, in the roll forming, by a plurality of rotations of the roll forming rollers 11, the raw material deformed reinforcing bar W1 including the diameter enlarged portions W1d (W1d') at a plurality of locations in the intermediate portion in the longitudinal direction is formed by rolling. Then, the raw material deformed reinforcing bar W1 is cut at the circumferential grooves 6 of the diameter enlarged portions W1d (W1d') at optional locations, and male threaded portions 1c are formed by rolling in the diameter enlarged portions W1d at the cut locations.

The other configuration in this embodiment and the configuration other than the configurations described particularly below are the same as that in the embodiment described above with reference to Figs. 1A, 1B, and 1C.

In the case of this embodiment, in the portion of the reinforcing bar 1 that is formed as the escape threaded portion 1e, the outer diameter of the reinforcing bar main body 1a is larger than that of the general portion 1f in the reinforcing bar 1, that is, R2' > R2 in Figs. 13B and 13C. Thus, even when an excessive tensile load is applied to the reinforcing bar 1, the reinforcing bar 1 is not broken at the coupling portion (the portion of the escape threaded portion 1e and the male threaded portion 1c) eventually, but breakage occurs at the general portion 1f.

In addition, in the reinforcing bar 1 according to this embodiment, as shown in Fig. 14, the diameter enlarged portions W1d' in which the male threaded portion 1c is not formed and which have the same diameter as that of the diameter enlarged portion W1d which forms the male threaded portion 1c are provided in the intermediate portion in the longitudinal direction. Thus, the following advantages are obtained.

Specifically, when the raw material deformed reinforcing bar W1 including the diameter enlarged portions W1d is formed by roll forming as described above with reference to Fig. 8, the diameter enlarged portion W1d is formed per length of the outer periphery of the forming roller 11. Accordingly, in the raw material deformed reinforcing bar W1 which is longer than the length of the outer periphery of the forming roller 11, the diameter enlarged portions W1d are present in the intermediate portion in the reinforcing bar longitudinal direction. Therefore, it is difficult to form a raw material deformed reinforcing bar including no diameter enlarged portion W1d in its intermediate portion. The raw material deformed reinforcing bar W1 including the diameter enlarged portions W1d in its intermediate portion can be easily obtained by roll forming. Even through there are the diameter enlarged portions W1d in the intermediate portion, the diameter enlarged portions W1d may be buried in concrete when the reinforcing bar is used. In this case, the diameter enlarged portions W1d merely have a cylindrical shape, and thus an adhesive force thereof to concrete is low as compared to a deformed portion. However, when the circumferential groove 6 is provided at the center of the diameter enlarged portion as described above, this is equivalent to provision of a node portion at one location, and the adhesive force is increased. In addition, when cutting is performed to form the male threaded portion 1c, the circumferential groove 6 at the center of the diameter enlarged portion W1d serves as a mark for the cutting, which leads to improvement of the workability of the cutting.

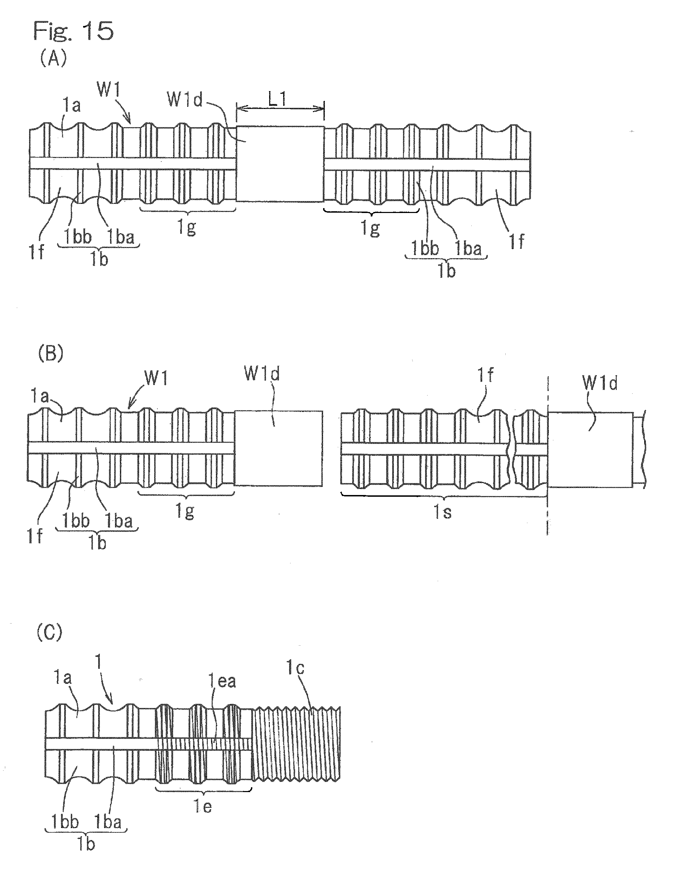

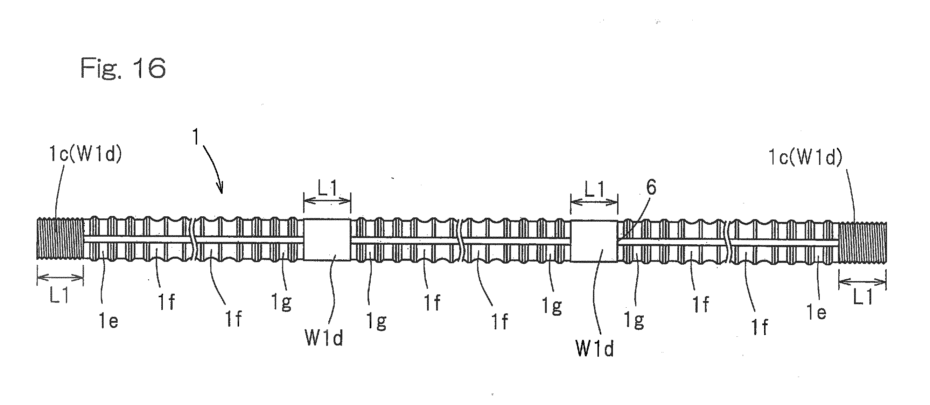

Figs. 15 and 16 further illustrate a threaded deformed reinforcing bar and a manufacturing method thereof according to sixth and seventh embodiments. In the reinforcing bar 1 in this example the length of each intermediate diameter enlarged portion W1d (W1d'), shown in Fig. 14, in which a male threaded portion is not formed, is made the same as the length L1 of the male threaded portion 1c. The other configuration is the same as that of the reinforcing bar 1 described with reference to Fig. 14.

The method for manufacturing the threaded deformed reinforcing bar 1 in Fig. 16 will be described with reference to Fig. 15. Similarly to the reinforcing bar 1 in Fig. 14, the reinforcing bar 1 is obtained by roll forming as described above with reference to Fig. 8. In the roll forming, by a plurality of rotations of the roll forming rollers 11, a raw material deformed reinforcing bar W1 including the diameter enlarged portions W1d having the length L1 at a plurality of locations in the intermediate portion in the longitudinal direction is formed by roll forming (Fig. 15(A)). The raw material deformed reinforcing bar W1 is cut at an end portion of the diameter enlarged portion W1d at an optional location as shown in Fig. 15(B), and a male threaded portion 1c is formed in the diameter enlarged portion W1d at the cut location by rolling (Fig. 15(C)). The remaining reinforcing bar which has been cut at the diameter enlarged portion W1d includes no diameter enlarged portion W1d at its end portion, and thus a remnant reinforcing bar 1s which is a portion to the adjacent diameter enlarged portion W1d or to the diameter enlarged portion W1d away over some other diameter enlarged portions W1d is used as a reinforcing bar for a use different from the threaded reinforcing bar coupling according to the present invention.

It should be noted that when roll forming is conducted as shown in Fig. 8, the recess 11a for forming a diameter enlarged portion may be provided on the outer peripheral surface of each forming roller 11 and at a plurality of locations in the circumferential direction such that a plurality of diameter enlarged portions W1d are formed by one rotation of the forming rollers 11.

The other configuration in this embodiment is the same as that in the embodiment described above with reference to Figs. 11 to 14.

In the case of this embodiment, although there is the disadvantage that the remnant reinforcing bar 1s occurs, since the length of each intermediate diameter enlarged portion W1d in which a male threaded portion is not formed is short, the anchorage performance of the diameter enlarged portion W1d with respect to concrete is excellent.

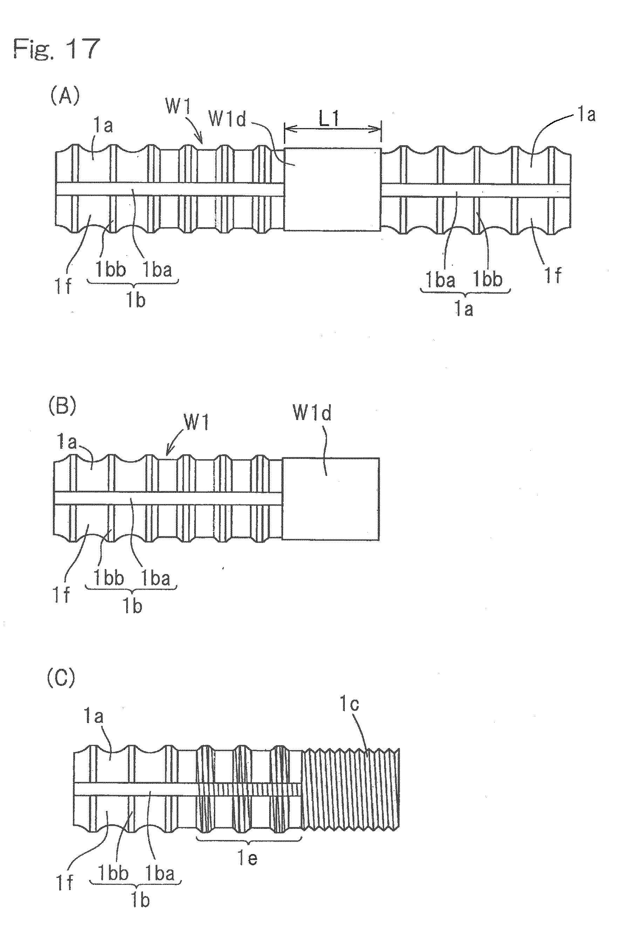

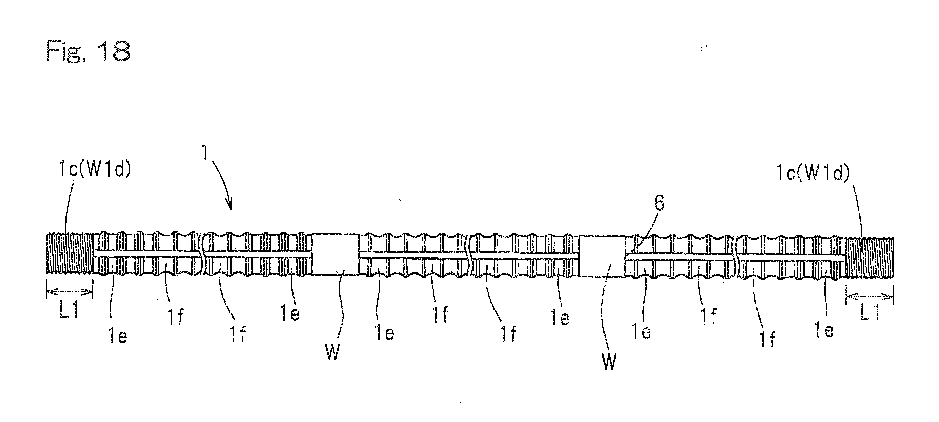

In the case of the reinforcing bar 1 including the diameter enlarged portions W1d having the male threaded portion length L1 in its intermediate portion as shown in Figs. 15 and 16, the raw material deformed reinforcing bar W1 may be formed by roll forming such that, as shown in Figs. 17 and 18, the escape threaded portion 1e adjacent to the diameter enlarged portion W1d is provided only at one side of the diameter enlarged portion W1d and the general portion If directly follows the diameter enlarged portion W1d at the other side thereof.

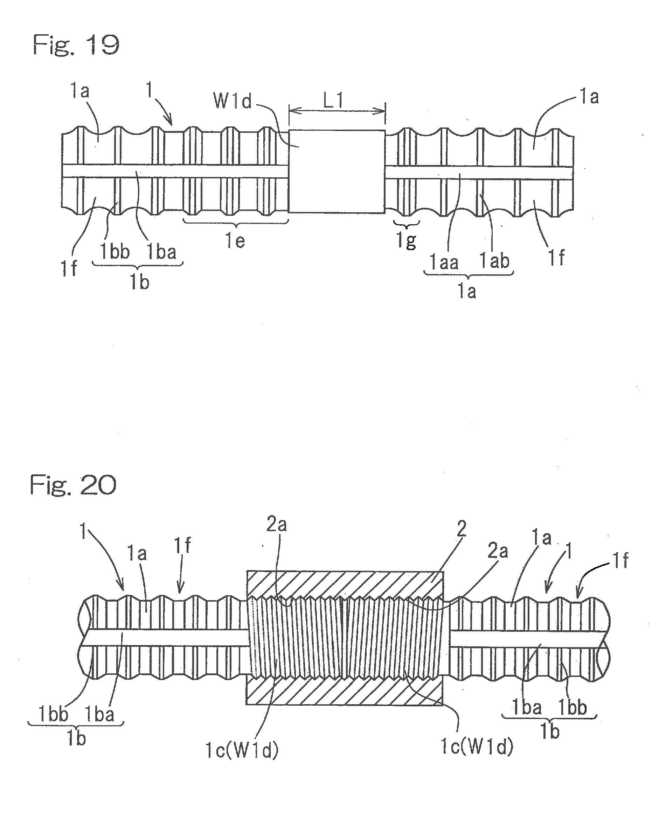

In addition, as shown in Fig. 19, in the case where the escape threaded portion 1e is adjacently provided only at one side of the diameter enlarged portion W1d, an escape thread unformed portion 1g shorter than the escape threaded portion 1e may be provided at the other side of the diameter enlarged portion W1d. The escape thread unformed portion 1g has an outer diameter of the reinforcing bar main body 1a larger than that of the general portion If in a similar manner to the escape threaded portion 1e and a male thread is not formed. When the escape thread unformed portion 1g is formed, a rapid change in the cross-sectional dimension of the reinforcing bar 1 from the diameter enlarged portion W1d to the general portion If is avoided, and the cross-sectional dimension gradually changes. Thus, stress concentration is unlikely to occur in the reinforcing bar 1, and the reinforcing bar 1 is excellent in strength.

Fig. 20 shows a threaded reinforcing bar coupling for a deformed reinforcing bar according to a ninth embodiment of the present invention. In this embodiment, a portion of each reinforcing bar 1 that follows the diameter enlarged portion W1d which forms the male threaded portion 1c is not formed as an escape threaded portion and is formed as a general portion 1f. In addition, the male threaded portions 1c, 1c of a pair of the reinforcing bars 1, 1 connected by a threaded cylinder 2 are threaded so as to be inverse to each other. The threaded cylinder 2 includes, at both sides of its center in the longitudinal direction as a boundary, female threaded portions 2a, 2a which are threaded so as to be inverse to each other.

In the case where the male threaded portions 1c, 1c of the pair of reinforcing bars 1, 1 connected by the threaded cylinder 2 are threaded so as to be inverse to each other as in this embodiment, both reinforcing bars 1, 1 are pulled toward each other by rotation of the threaded cylinder 2, and the threaded cylinder 2 is simultaneously screwed at its both ends onto the leading ends of the male threaded portions 1c, 1c of the reinforcing bars 1, 1. Thus, the connection can be easily made even without the escape threaded portion 1e. The other configuration and the other advantageous effects in this embodiment are the same as those in the first embodiment shown in Fig. 1A and the like.

It should be noted that in each embodiment described above, in the case where the escape threaded portion 1e is provided, the cross-sectional area of any reinforcing bar 1 is set such that (male threaded portion 1c) > (escape threaded portion 1e) ≥ (general portion 1f). But the cross-sectional area of the portion of the escape threaded portion 1e that is formed as the reinforcing bar main body 1a may be increased to provide a relationship of (escape threaded portion 1e) > (male threaded portion 1c) > (general portion 1f). Here, the cross-sectional area of each portion of the reinforcing bar 1 refers to the cross-sectional area of a portion having a minimum cross section in each portion. It should be noted that in the male threaded portion 1c and the escape threaded portion 1e, although the thread groove portion is small in diameter due to the formation of the thread groove, since the thread groove has a spiral shape, the thread groove is present in a half peripheral portion of a cross section of the reinforcing bar 1, and the thread ridge formed on the node 1ba is present in the other half peripheral portion thereof. Thus, the male threaded portion 1c and the escape threaded portion 1e are less affected by a reduction in the cross section which is caused due to the formation of the thread groove.

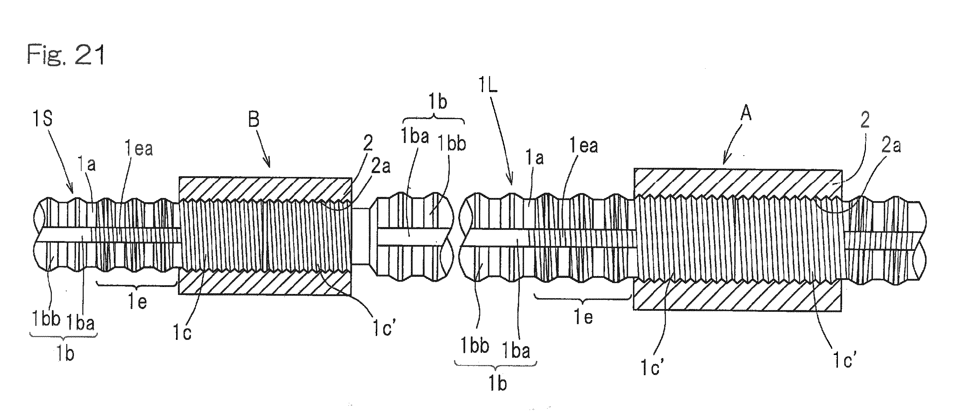

Fig. 21 illustrates a tenth embodiment of a threaded reinforcing bar coupling which connects reinforcing bars having different diameters. In this example, a small-diameter reinforcing bar is denoted by a reference sign "1S" and a large-diameter reinforcing bar is denoted by a reference sign "1L".

In Fig. 21, as a threaded cylinder 2, a threaded cylinder that is the same as that of a threaded reinforcing bar coupling which connects the small-diameter reinforcing bars 1 S is used. The small-diameter reinforcing bar IS screwed into the threaded cylinder 2 includes an escape threaded portion 1e and a male threaded portion 1c connecting the reinforcing bars 1, 1 having the same diameter in Figs. 11 to 14. A male threaded portion 1c' of the large-diameter reinforcing bar 1L which is screwed into the threaded cylinder 2 is formed by rolling on an outer periphery of a perfect circle portion which is formed at an end portion of the reinforcing bar 1 L and has the same outer diameter as that of the diameter enlarged portion W1d (Fig. 7) of the small-diameter reinforcing bar 1 S. A threaded reinforcing bar coupling A which connects the large-diameter reinforcing bars 1 L to each other is the same as that in the example in Fig. 1A. In addition, a threaded reinforcing bar coupling (not shown in Fig. 21) which connects the small-diameter reinforcing bars IS to each other is also the same as that in the example in Fig. 1A.

It should be noted that as examples of the reinforcing bar diameter, each small-diameter reinforcing bar 1S is a reinforcing bar with diameter of 16 mm, and each large-diameter reinforcing bar 1L is a reinforcing bar with diameter of 19 mm. In the case of this configuration, as the threaded cylinder 2, it is unnecessary to prepare one dedicated for connection of reinforcing bars having different diameters, and it is possible to avoid an increase in the number of types of components.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1, 1A, 1B: reinforcing bar
- 1a: reinforcing bar main body
- 1b: projection
- 1ba: rib
- 1bb: node
- 1c: male threaded portion
- 1e: escape threaded portion
- 1ea: spiral escape groove
- 1f: general portion
- 1g: escape thread unformed portion
- 1s: remnant reinforcing bar
- 2: threaded cylinder
- 3: anchor plate
- 6: circumferential groove
- 11: forming roller
- 12: guide
- 13: rolling roller
- D1: reinforcing bar outermost diameter
- D2: outer diameter of reinforcing bar main body
- L1: length of male threaded portion
- L2: threaded cylinder overall length
- W0: wire rod
- W1: elongate deformed reinforcing bar which is raw material
- W1d, W1d': diameter enlarged portion

## Claims

1. A threaded reinforcing bar coupling for a deformed reinforcing bar, the threaded reinforcing bar coupling connecting a pair of reinforcing bars, wherein
a male threaded portion is provided at each of opposed end portions of the pair of reinforcing bars to be connected to each other,
a threaded cylinder is provided so as to be screwed onto the male threaded portions of both reinforcing bars,
at least one reinforcing bar of the pair of reinforcing bars is a deformed reinforcing bar including a projection on an outer peripheral surface of a reinforcing bar main body, and
in the at least one reinforcing bar which is the deformed reinforcing bar, the projection on the outer peripheral surface is formed and a diameter enlarged portion which is larger in diameter than another portion is formed in a portion in a longitudinal direction by roll forming on an iron wire rod which is a raw material, an outer diameter of the diameter enlarged portion is not larger than a reinforcing bar outermost diameter including the projection of the reinforcing bar, and the male threaded portion is formed in the diameter enlarged portion by rolling.

2. The threaded reinforcing bar coupling for a deformed reinforcing bar as claimed in claim 1, wherein, in the at least one reinforcing bar which is the deformed reinforcing bar, a portion following a base end of the male threaded portion is formed as an escape threaded portion in which a spiral escape groove which is engaged with a thread ridge of a female threaded portion of the threaded cylinder is formed on the projection on the outer peripheral surface by rolling.

3. The threaded reinforcing bar coupling for a deformed reinforcing bar as claimed in claim 2, wherein, in the portion of the deformed reinforcing bar that is formed as the escape threaded portion, an outer diameter of the reinforcing bar main body is larger than that of a general portion in the deformed reinforcing bar.

4. A threaded deformed reinforcing bar connected by the threaded reinforcing bar coupling as claimed in claim 1, the deformed reinforcing bar comprising:
a projection on an outer peripheral surface of a reinforcing bar main body; and
a male threaded portion at an end portion, wherein
the projection on the outer peripheral surface is formed and a diameter enlarged portion is formed in a portion in a longitudinal direction by roll forming on an iron wire rod which is a raw material, an outer diameter of the diameter enlarged portion is not larger than a reinforcing bar outermost diameter including the projection of the reinforcing bar, and the male threaded portion is formed in the diameter enlarged portion by rolling.

5. The threaded deformed reinforcing bar as claimed in claim 4, wherein, in the threaded deformed reinforcing bar, a portion following a base end of the male threaded portion is formed as an escape threaded portion in which a spiral escape groove which is to be engaged with a thread ridge of a female threaded portion of the threaded cylinder screwed onto the male threaded portion is formed on the projection on the outer peripheral surface by rolling.

6. The threaded deformed reinforcing bar as claimed in claim 4, further comprising, in an intermediate portion of the reinforcing bar in a longitudinal direction, a diameter enlarged portion in which a male threaded portion is not formed and which has the same diameter as that of the diameter enlarged portion that forms the male threaded portion.

7. The threaded deformed reinforcing bar as claimed in claim 6, wherein the diameter enlarged portion which is provided in the intermediate portion of the reinforcing bar in the longitudinal direction and in which the male threaded portion is not formed has the same length as that of the male threaded portion.

8. The threaded deformed reinforcing bar as claimed in claim 6, wherein the diameter enlarged portion which is provided in the intermediate portion of the reinforcing bar in the longitudinal direction and in which the male threaded portion is not formed has a length which is about twice as large as a length of the male threaded portion.

9. The threaded deformed reinforcing bar as claimed in any one of claims 4 to 8, wherein the threaded deformed reinforcing bar includes the male threaded portions at both ends thereof, the threaded cylinder connecting the threaded deformed reinforcing bar to another threaded deformed reinforcing bar is screwed onto the male threaded portion at one of the ends, and an anchor plate which is to be a reinforcing bar head portion for anchoring in concrete is screwed at a female threaded portion formed in an inner periphery thereof onto the male threaded portion at the other end.

10. A method for manufacturing the threaded deformed reinforcing bar as claimed in claim 4 which includes a projection on an outer peripheral surface of a reinforcing bar main body and a male threaded portion at an end portion, the method comprising:
conducting roll forming on an iron wire rod which is a raw material, to form the projection on the outer peripheral surface and to form a diameter enlarged portion in a portion in a longitudinal direction;
setting an outer diameter of the diameter enlarged portion to be not larger than a reinforcing bar outermost diameter including the projection of the reinforcing bar;
cutting the diameter enlarged portion at its end portion; and
forming the male threaded portion in the diameter enlarged portion of the cut deformed reinforcing bar by rolling.

11. The method for manufacturing the threaded deformed reinforcing bar as claimed in claim 10, wherein a raw material reinforcing bar including the diameter enlarged portions at a plurality of locations in an intermediate portion thereof in the longitudinal direction is formed by roll forming with a plurality of rotations of roll forming rollers, a raw material deformed reinforcing bar is cut at an end portion, in the longitudinal direction, of the diameter enlarged portion at an optional location, and the male threaded portion is formed in the diameter enlarged portion at the cut location by rolling.

12. A method for manufacturing the threaded deformed reinforcing bar as claimed in claim 4 which includes a projection on an outer peripheral surface of a reinforcing bar main body and a male threaded portion at an end portion, the method comprising:
conducting roll forming on an iron wire rod which is a raw material, to form the projection on the outer peripheral surface and to form a diameter enlarged portion in a portion in a longitudinal direction;
setting an outer diameter of the diameter enlarged portion to be not larger than a reinforcing bar outermost diameter including the projection of the reinforcing bar;
cutting the diameter enlarged portion at its intermediate portion; and
forming the male threaded portion in the diameter enlarged portion of each cut deformed reinforcing bar by rolling.

13. The method for manufacturing the threaded deformed reinforcing bar as claimed in claim 12, wherein a raw material reinforcing bar including the diameter enlarged portions at a plurality of locations in an intermediate portion thereof in the longitudinal direction is formed by roll forming with a plurality of rotations of roll forming rollers, a raw material deformed reinforcing bar is cut at a center portion, in the longitudinal direction, of the diameter enlarged portion at an optional location, and the male threaded portion is formed in the diameter enlarged portion at the cut location by rolling.
